# EUROPEAN PATENT APPLICATION

(11) **EP 4 564 530 A2**
(43) Date of publication of application: **04.06.2025**
(21) Application number: 24198034.1
(22) Date of filing: 03.09.2024
(51) Int. Cl.: H01M 10/615, B60L 58/27, H01M 10/658, H01M 50/172, H01M 50/503, H01M 50/528, H01M 50/567, H01M 50/569, H01R 4/02, H01R 4/06

(54) **BATTERY CELL HEATING APPARATUS AND BATTERY MODULE**

(30) Priority: 30.11.2023 KR 20230171232
(71) Applicant: SAMSUNG SDI CO., LTD., Giheung-gu Yongin-si, Gyeonggi-do 17084 (KR)
(72) Inventor: Park, Kyung Hoon, 16678 Suwon-si, Gyeonggi-do (KR)
(74) Representative: Gulde & Partner

(57) **Abstract**

The present disclosure relates to a battery cell heating apparatus (100, 200, 300) and a battery module (10) including the battery cell heating apparatus (100, 200, 300). The battery cell heating apparatus (100, 200, 300) includes a heater (130, 230, 330) configured to emit heat to heat a battery cell (11), a circuit part (140, 240, 340) electrically connected to the heater (130, 230, 330) and configured to supply power to the heater (130, 230, 330), an insulator (115, 120, 220, 320) configured to reduce heat transfer such that the circuit part (140, 240, 340) is heated less by the heat emitted by the heater (130, 230, 330), and an outer cover (101, 201, 301) which surrounds and fixedly holds the heater (130, 230, 330), the circuit part (140, 240, 340), and the insulator (115, 120, 220, 320).

## Description

### CROSS-REFERENCE TO RELATED APPLICATION

### BACKGROUND

### 1. Field

One or more embodiments of the present disclosure relate to a battery cell heating apparatus and a battery module.

### 2. Description of the Related Art

Generally, as the demand for portable electronic products such as notebook computers, video cameras, and portable phones increases rapidly and commercialization of robots, electric vehicles, and the like begins in earnest, research on high-performance secondary batteries capable of repeated charging and discharging is being actively conducted.

The aforementioned information disclosed in this background section is merely for enhancement of understanding of the background technology of the present disclosure, and therefore may contain information that does not constitute the related art.

### SUMMARY

The invention is defined by the appended claims. The description that follows is subjected to this limitation. Any disclosure lying outside the scope of said claims is only intended for illustrative as well as comparative purposes.
One ore more embodiments of the present disclosure are directed to a battery cell heating apparatus, which may heat a battery cell to suppress the degradation of a battery module in a low-temperature environment, and a battery module.
However, technical problems to be solved by the present disclosure are not limited to the task described above, and various other tasks, which are not described above may be clearly understood by one of ordinary skill in the art from the description of the present disclosure as below.

According to one or more embodiments, a battery cell heating apparatus includes a heater configured to emit heat to heat a battery cell; a circuit part electrically connected to the heater and configured to supply power to the heater; an insulator which suppresses heat transfer so that the circuit part is not heated by the heat emitted by the heater; and an outer cover which surrounds and fixedly locates the heater, the circuit part, and the insulator.

The insulator may at least partially overlap the circuit part and the heater to further suppress heat transfer.

In other words, the outer cover may surround and firmly hold the heater, the circuit part and the insulator.

In other words, the insulator may be configured to reduce the heat transfer between the heater and the circuit part, so that the circuit part is heated less by the heat emitted by the heater.

The circuit part may be disposed around the heater, the heater may include a heater terminal, the circuit part may include a circuit part terminal, and the heater terminal and the circuit part terminal may overlap and may be electrically connected to each other.

Each of the heater terminal and the circuit part terminal may include a terminal body formed of a metal material, and a solder layer stacked on the terminal body so that the heater terminal and the circuit part terminal may be bonded when the heater terminal and the circuit part terminal are in close contact and melted while being heated.

The battery cell heating apparatus may further include a solder interposed between the heater terminal and the circuit part terminal which overlap so that the heater terminal and the circuit part terminal are electrically connected.

The battery cell heating apparatus may further include a rivet passing through and coupling the heater terminal and the circuit part terminal so that the heater terminal and the circuit part terminal are electrically connected.

In other words, each of the heater terminal and the circuit part terminal may include a terminal body including a metal material, and at least one of a solder layer stacked on the terminal body such that the heater terminal and the circuit part terminal are bonded if the heater terminal and the circuit part terminal are in close contact and melted while being heated, a solder disposed between the overlapping heater terminal and the circuit part terminal such that the heater terminal and the circuit part terminal are electrically connected, and a rivet passing through and coupling the heater terminal and the circuit part terminal such that the heater terminal and the circuit part terminal are electrically connected.

The insulator may include a first insulator which may partially cover a side surface of the heater facing the battery cell and a side surface of the circuit part facing the battery cell, and a second insulator which may entirely cover a side surface of the heater opposite to the battery cell and may partially covers a side surface of the circuit part opposite to the battery cell. In other words, the insulator may include a first insulator which partially covers a surface of the heater facing the battery cell and a surface of the circuit part facing the battery cell, and a second insulator which entirely covers a surface of the heater facing away from the battery cell and partially covers a surface of the circuit part facing away from the battery cell.

The circuit part may be located to be spaced further apart from the battery cell than the heater is from the battery cell. In other words, the circuit part is spaced further apart from the battery cell than the heater is from the battery cell.

The heater may include a heater terminal, the circuit part may include a circuit part terminal disposed to overlap the heater terminal, the insulator may be disposed between the heater terminal and the circuit part terminal, and the insulator may be provided with a terminal connecting part which electrically connects the heater terminal and the circuit part terminal.

The heater may include a heater terminal, the circuit part may include a circuit part terminal, wherein the heater terminal and the circuit part terminal may overlap and may be electrically connected to each other, and wherein the circuit part may be disposed around the heater, and/or wherein the insulator may be disposed between the heater terminal and the circuit part terminal, wherein the insulator includes a terminal connecting part electrically connecting the heater terminal and the circuit part terminal.

The circuit part may be disposed around the heater.

The outer cover may include a first film located to face the battery cell and a second film located to be spaced further apart from the battery cell than the first film is from the battery cell. In other words, wherein the outer cover may include a first film facing the battery cell, and a second film spaced further apart from the battery cell than the first film.

The first film may be partially open so that the heater faces the battery cell. In other words, the first film includes an opening such that the heater faces the battery cell. In other words, the first film may include an opening extending between both opposite surfaces of the film, such that the heater is fluidly connected with an upper side of the battery cell.

The heater may include carbon nanotubes.

The battery cell heating apparatus may further include a sensor which is electrically connected to the circuit part, measures a state of the battery cell, and is located outside the outer cover. In other words, the battery cell heating apparatus may further include a sensor which is electrically connected to the circuit part, configured to measure a state of the battery cell, and located outside the outer cover.

The sensor may include at least one of a voltage sensor which measures a voltage of the battery cell and a temperature sensor which measures a temperature of the battery cell. In other words, the sensor may include a voltage sensor configured to measure a voltage of the battery cell and/or a temperature sensor which configured to measure a temperature of the battery cell.

The heater may include a plurality of heating parts located so as not to overlap each other, the sensor may include a plurality of temperature sensors which correspond one-to-one to the plurality of heating parts and measure temperatures around the heating parts, and operation of one heating part of the plurality of heating parts may be controlled according to a temperature measured by one temperature sensor of the plurality of temperature sensors corresponding to the one heating part. In other words, the heater may include a plurality of heating parts located such that they do not overlap each other, the sensor may include a plurality of temperature sensors, the number of which correspond at least one-to-one with the plurality of heating parts and which are configured to measure temperatures around the plurality of heating parts, and wherein each heating part of the plurality of heating parts may be configured such that its operation is controlled according to a temperature measured by a corresponding temperature sensor of the plurality of temperature sensors.

The battery cell heating apparatus may include a controller which may be connected to the battery cells, the circuit part or the sensor through a multitude of wires. The controller may be configured to calculate the described operating modes and execute them by issuing corresponding commands, for example to the circuit part, and/or to receive and evaluate measurement data from the sensors.

According to one or more embodiments, a battery module includes a plurality of battery cells and a battery cell heating apparatus including a heater which emits heat to heat the battery cells, a circuit part electrically connected to the heater to supply power to the heater, an insulator which suppresses heat transfer so that the circuit part is not heated by the heat emitted by the heater, and an outer cover which surrounds and fixedly locates the heater, the circuit part, and the insulator.

In other words, a battery module may comprise a plurality of battery cells and a battery cell heating apparatus according to any one of the preceding claims including the heater configured to emit heat to heat at least one battery cell of the plurality of battery cells, the circuit part electrically connected to the heater and configured to supply power to the heater, the insulator configured to reduce heat transfer such that the circuit part is heated less by the heat emitted by the heater, and the outer cover which surrounds and fixedly holds the heater, the circuit part, and the insulator.

The plurality of battery cells may be disposed in a line in one direction, and the battery cell heating apparatus may be in contact with the plurality of battery cells and extend in the one direction.

The battery cell heating apparatus may further include a sensor which may be electrically connected to the circuit part, measures a state of the battery cell, and is located outside the outer cover, the heater may include a plurality of heating parts located so as not to overlap each other, the sensor may include a plurality of temperature sensors which correspond one-to-one to the plurality of heating parts and measure temperatures around the heating parts, and operation of one heating part of the plurality of heating parts may be controlled according to a temperature measured by one temperature sensor of the plurality of the temperature sensors corresponding to the one heating part. In other words, the battery cell heating apparatus may further include a sensor which may be electrically connected to the circuit part, located outside the outer cover, and configured to measure a state of a battery cell of the plurality of battery cells; the heater may include a plurality of heating parts located such that they do not overlap each other; the sensor may include a plurality of temperature sensors which correspond one-to-one to the plurality of heating parts and may be configured to measure temperatures around the plurality of heating parts; and each heating part of the plurality of heating parts may be configured such that its operation may be controlled according to a temperature measured by its corresponding temperature sensor of the plurality of temperature sensors.

When a temperature measured by the one temperature sensor is smaller than a preset reference temperature, the one heating part may be turned on, and when a temperature measured by the one temperature sensor is greater than the reference temperature or equal to the reference temperature, the one heating part may be turned off. In other words, each heating part of the plurality of heating parts may be configured to turn on if a temperature measured by its corresponding temperature sensor of the plurality of temperature sensors is smaller than a preset reference temperature, and each heating part of the plurality of heating parts may be configured to turn off if a temperature measured by its corresponding temperature sensor of the plurality of temperature sensors is greater than a reference temperature or equal to a reference temperature.

The plurality of heating parts may include a pair of first heating parts located in both end portions of the battery cell heating apparatus in a longitudinal direction and a second heating part located between the pair of first heating parts; a length of the second heating part may be greater than a length of the first heating part; and a planar area of the second heating part may be smaller than a planar area of the first heating part.

The battery module may also include a battery management system (BMS), which is any suitable electronic system that is configured to manage the battery cell and battery module, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

### BRIEF DESCRIPTION OF THE DRAWINGS

The accompanying drawings in the present specification show embodiments of the present disclosure, and are illustrated to help further understand the technical concept, aspects and features of the present disclosure, together with the detailed description of the present disclosure. The drawings illustrate aspects of some embodiments of the present disclosure and, together with the description, serve to explain aspects of some embodiments of the present disclosure. Therefore, the present disclosure shall not be interpreted as being defined only by the aspects illustrated in the drawings.
FIG. 1 is a plan view illustrating a battery module according to embodiments of the present disclosure;
FIG. 2 is an exploded perspective view illustrating a plurality of battery cells, a plurality of busbars, and a battery cell heating apparatus included in the battery module according to embodiments of the present disclosure;
FIG. 3 is a cross-sectional view along line III-III of FIG. 2;
FIG. 4 is an exploded perspective view illustrating a battery cell heating apparatus according to first embodiments of the present disclosure illustrated in FIG. 2;
FIG. 5 is an enlarged view illustrating portion V of FIG. 4;
FIG. 6 is an enlarged view illustrating portion VI of FIG. 4;
FIG. 7 is a cross-sectional view illustrating a first example in a state in which a circuit part terminal of FIG. 5 is electrically connected to a heating element terminal of FIG. 6;
FIG. 8 is a cross-sectional view illustrating a second example in a state in which the circuit part terminal of FIG. 5 is electrically connected to the heating element terminal of FIG. 6;
FIG. 9 is a cross-sectional view illustrating a third example in a state in which the circuit part terminal of FIG. 5 is electrically connected to the heating element terminal of FIG. 6;
FIG. 10 is a plan view illustrating the plurality of battery cells and a heater included in the battery module according to embodiments of the present disclosure;
FIG. 11 is an exploded perspective view illustrating a battery cell heating apparatus according to second embodiments of the present disclosure;
FIG. 12 is a longitudinal sectional view illustrating the battery cell heating apparatus according to the second embodiments of the present disclosure;
FIG. 13 is an enlarged view illustrating portion XIII of FIG. 11;
FIG. 14 is an enlarged view illustrating portion XIV of FIG. 11;
FIG. 15 is a cross-sectional view illustrating a first example in a state in which a circuit part terminal of FIG. 13 is electrically connected to a heating element terminal of FIG. 14;
FIG. 16 is a cross-sectional view illustrating a second example in a state in which the circuit part terminal of FIG. 13 is electrically connected to the heating element terminal of FIG. 14;
FIG. 17 is a cross-sectional view illustrating a third example in a state in which the circuit part terminal of FIG. 13 is electrically connected to the heating element terminal of FIG. 14; and
FIG. 18 is a cross-sectional view illustrating a battery cell heating apparatus according to third embodiments of the present disclosure.

### DETAILED DESCRIPTION

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be more thorough and more complete, and will more fully convey the scope of embodiments according to the present disclosure to those skilled in the art.

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description. Expressions such as "at least one of," if preceding a list of elements, modify the entire list of elements and do not modify the individual elements of the list.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified. As used herein, the term "or" is not an exclusive term, e.g., "A or B" would include A, B, or A and B.

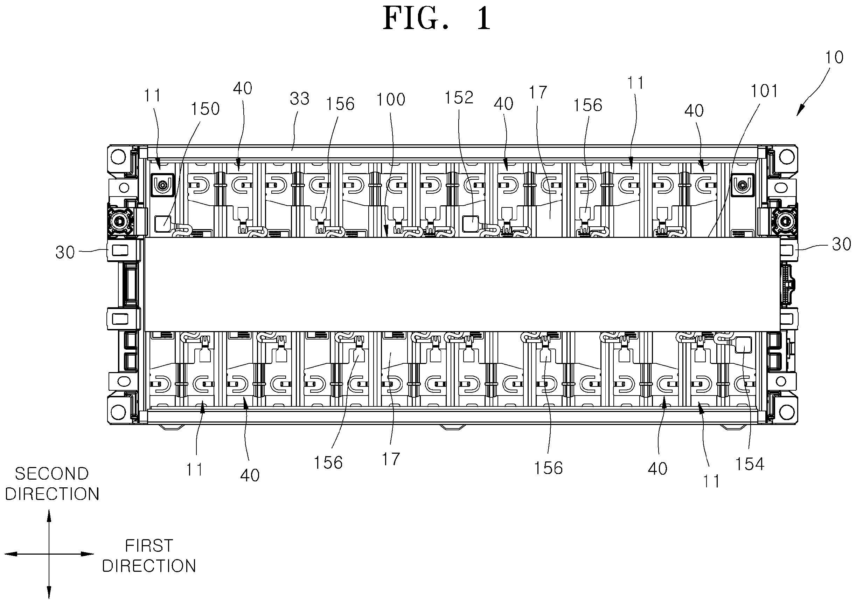

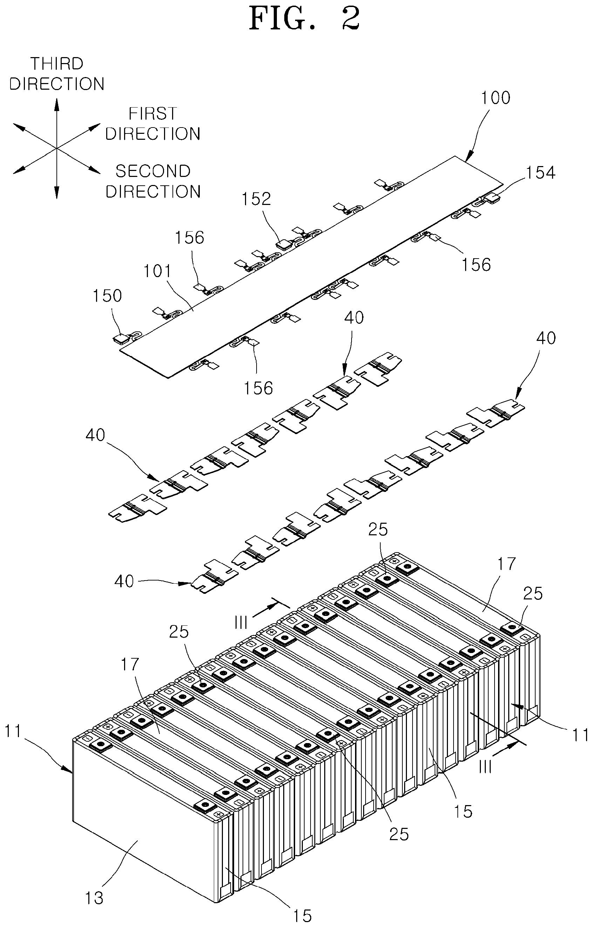

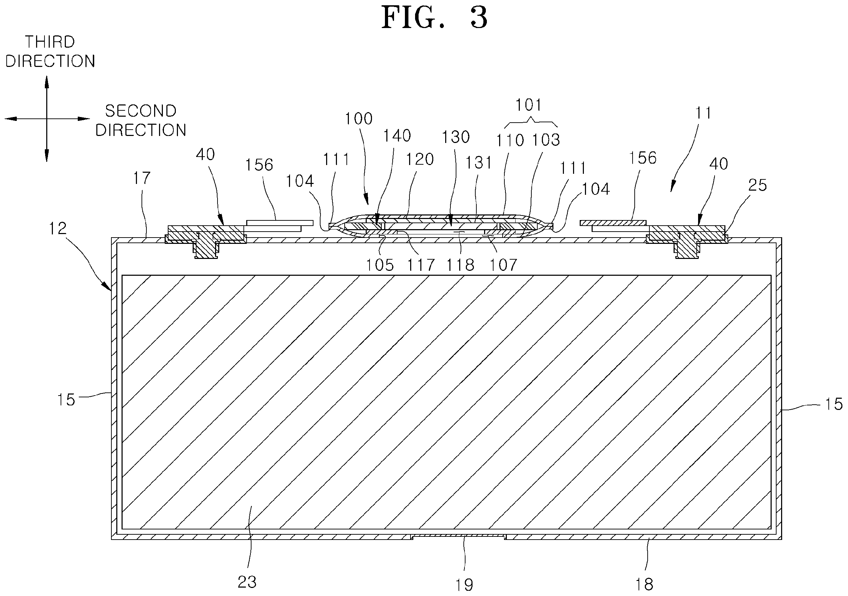

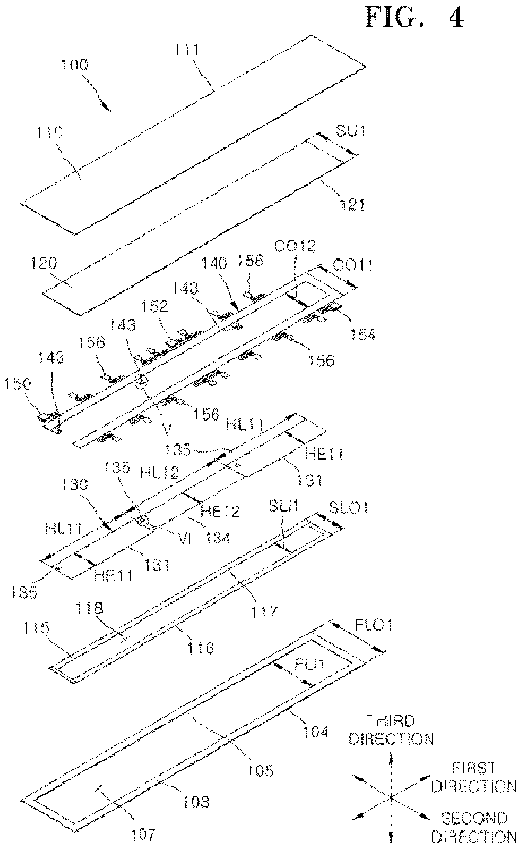

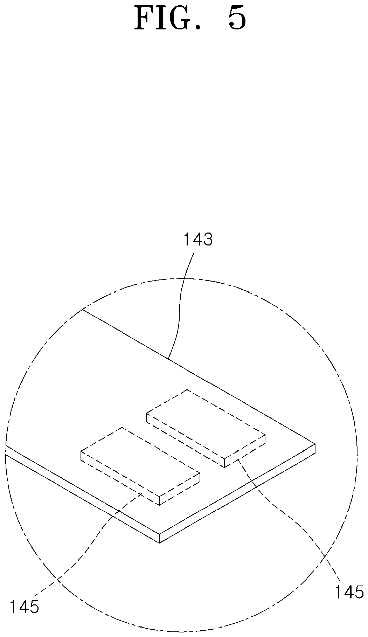

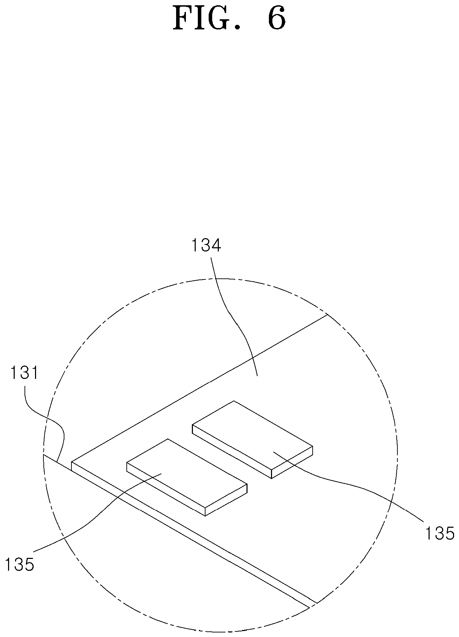

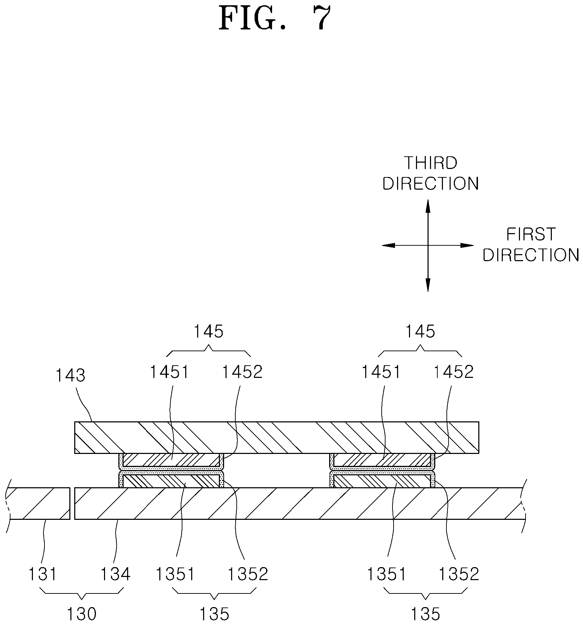

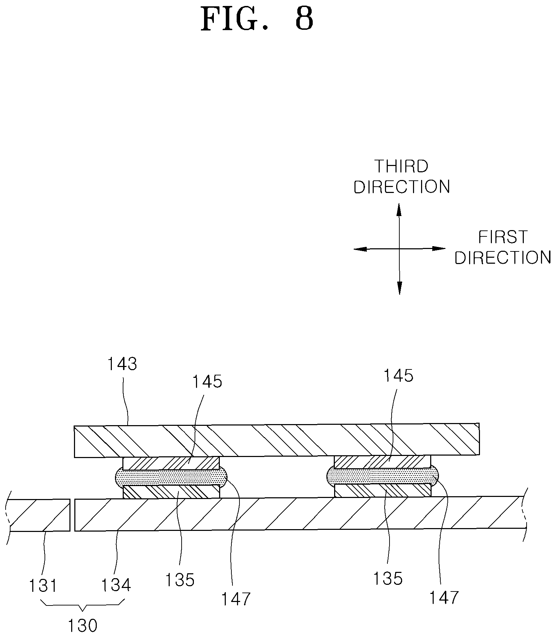

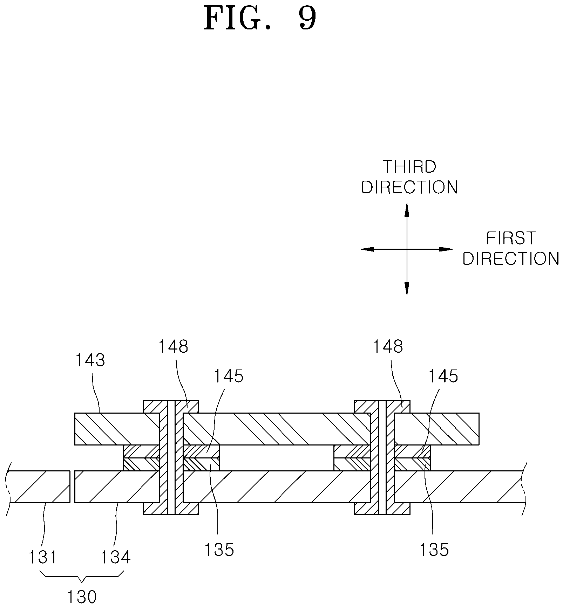

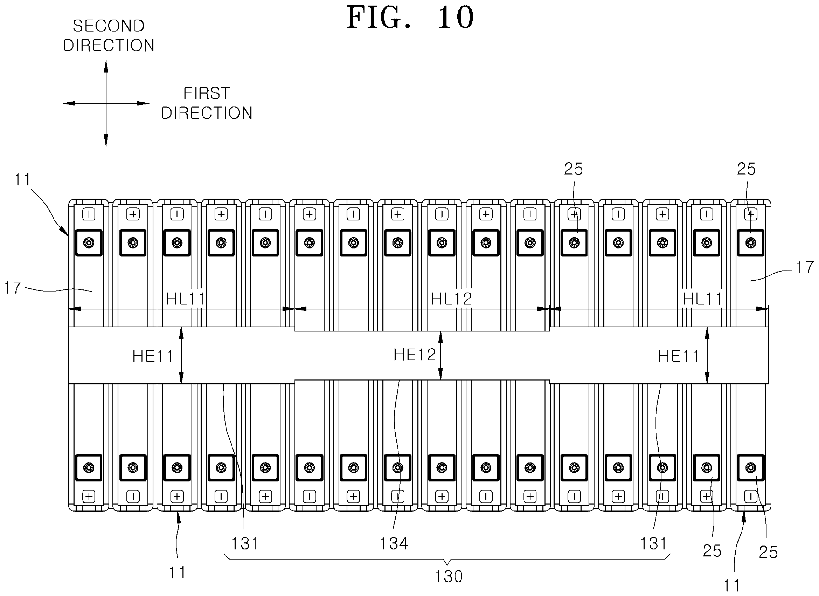

FIG. 1 is a plan view illustrating a battery module according to embodiments of the present disclosure, and FIG. 2 is an exploded perspective view illustrating a plurality of battery cells, a plurality of busbars, and a battery cell heating apparatus included in the battery module according to embodiments of the present disclosure. FIG. 3 is a cross-sectional view along line III-III of FIG. 2, and FIG. 4 is an exploded perspective view illustrating a battery cell heating apparatus according to a first embodiment of the present disclosure illustrated in FIG. 2. FIG. 5 is an enlarged view illustrating portion V of FIG. 4, and FIG. 6 is an enlarged view illustrating portion VI of FIG. 4. FIG. 7 is a cross-sectional view illustrating a first example in a state in which a circuit part terminal of FIG. 5 is electrically connected to a heating element terminal of FIG. 6, and FIG. 8 is a cross-sectional view illustrating a second example in a state in which the circuit part terminal of FIG. 5 is electrically connected to the heating element terminal of FIG. 6. FIG. 9 is a cross-sectional view illustrating a third example in a state in which the circuit part terminal of FIG. 5 is electrically connected to the heating element terminal of FIG. 6, and FIG. 10 is a plan view illustrating the plurality of battery cells and a heater included in the battery module according to embodiments of the present disclosure.

Referring to FIGS. 1 to 7, and 10, a battery module 10 according to embodiments of the present disclosure may include a plurality of battery cells 11, a plurality of busbars 40, and a battery cell heating apparatus 100. Each of the battery cells 11 may further include a cell case 12, a pair of cell terminals 25, and an electrode assembly 23.

The electrode assembly 23 may be accommodated in the cell case 12. The electrode assembly 23 may be formed by winding or stacking stacks each including a first electrode plate, a separator, and a second electrode plate, each of which may be formed in a thin plate shape or thin membrane shape.

According to one or more embodiments, the electrode assembly 23 may be a wound stack and a winding axis of the electrode assembly 23 may be parallel to a longitudinal direction of the cell case 12. According to one or more embodiments, the electrode assembly 23 may be a stacked type instead of a wound type. According to one or more embodiments, the electrode assembly 23 may be a Z-stack electrode assembly in which a positive electrode plate and a negative electrode plate may be between both sides of the separator bent in a Z-stack. According to one or more embodiments, one or more electrode assemblies 23 may be stacked and accommodated in the cell case 12 so that long side surfaces thereof may be close to each other. A first electrode plate of the electrode assembly 23 may serve as a negative electrode, and a second electrode plate may serve as a positive electrode. However, the opposite is also possible.

The first electrode plate may be formed by coating a first electric current collector plate, which may be formed of a metal foil, e.g., copper, a copper alloy, nickel, or a nickel alloy foil, with a first electrode active material, e.g., graphite or carbon and may include a first electrode tab (or first non-coating portion) which may be a region which may not be coated with the first electrode active material. The first electrode tab may be a path of a current flow between the first electrode plate and a first current collector part. According to one or more embodiments, the first electrode tab may be formed to protrude toward one side by cutting the first electrode plate if the first electrode plate is manufactured and may protrude toward one side farther than the separator without additional cutting.

The second electrode plate may be formed by coating a second electric current collector plate, which may be formed of a metal foil, e.g., an aluminum or aluminum alloy foil, with a second electrode active material, e.g., a transition metal oxide and may include a second electrode tab (or second non-coating portion) which may be a region which may not be coated with the second electrode active material. The second electrode tab may be a path of a current flow between the second electrode plate and a second current collector part. According to one or more embodiments, the second electrode tab may be formed to protrude toward the other side by cutting the second electrode plate if the second electrode plate is manufactured and may protrude toward the other side farther than the separator without additional cutting.

According to one or more embodiments, the first electrode tab may be located on a side surface of a left end of the electrode assembly, the second electrode tab may be located on a side surface of a right end of the electrode assembly, or the first electrode tab and the second electrode tab may be located on one surface in the same direction. In this case, the terms left side and the right side may be used for convenience of description, and the sides may be changed if the battery cell 11 rotates in a left-right or vertical direction.

The first electrode tab of the first electrode plate and the second electrode tab of the second electrode plate may be located on both end portions of the electrode assembly 23. According to one or more embodiments, the electrode assembly 23 may be accommodated in a case along with an electrolyte. According to one or more embodiments, in the electrode assembly 23, the first current collector part and the second current collector part may be welded and connected to and located at the first electrode tab of the first electrode plate and the second electrode tab of the second electrode plate, respectively.

The cell case 12 may have a substantially rectangular parallelepiped shape and accommodate the electrode assembly 23 and the electrolyte therein. The cell case 12 may include a metal can with one open side and a cap plate for sealing the open one side of the metal can. The pair of cell terminals 25 may be installed on the cap plate to protrude outward from the cap plate.

One cell terminal 25 of the pair of cell terminals 25 may be electrically connected to one current collector part of the first current collector part and the second current collector part, and the other cell terminal 25 may be electrically connected to the other current collector part of the first current collector part and the second current collector part. According to one or more embodiments, one cell terminal 25 of the pair of cell terminals 25 may be a positive electrode terminal, and the other cell terminal 25 thereof may be a negative electrode terminal.

The pair of cell terminals 25 may be located on both end portions of the cap plate in the longitudinal direction. One surface of the cell case 12 from which the pair of cell terminals 25 may protrude may be an upper surface 17 of the cell case 12, one surface opposite to the upper surface 17 of the cell case 12 may be a lower surface 18 of the cell case 12, and a pair of surfaces which connect the upper surface 17 and the lower surface 18 and may be opposite to each other may be a pair of side surfaces 15 of the cell case 12.

Each of the battery cells 11 may include a cell vent 19 which may be configured to burst to discharge emissions such as gas and a flame material, e.g., a flammable material, from the inside to the outside of the battery cell 11 if high-temperature gas, a flame material, and the like are generated due to overcharging or abnormal operation in the cell case 12. The cell vent 19 may be located in the lower surface 18 of the cell case 12.

The plurality of battery cells 11 may be arranged in a line in a front-rear direction. Rear surfaces of a pair of adjacent battery cells 11 among the plurality of battery cells 11 may face a front surface 13 of the cell case 12.

Hereinafter, the front-rear direction in which the plurality of battery cells 11 may be arranged in a line is referred to as a first direction, a width direction of the cell case 12 perpendicular to the first direction, that is, the left-right direction, is referred to as a second direction, and a vertical direction perpendicular to the first direction and the second direction is referred to as a third direction.

The battery module 10 may further include a pair of end frames 30 and a pair of side plates 33. One end frame 30 of the pair of end frames 30 may be in front of the plurality of battery cells 11 to hide, e.g., to cover, the front surface 13 of the battery cell 11 located at the frontmost side of the plurality of battery cells 11 arranged in the first direction.

The other end frame 30 of the pair of end frames 30 may be behind the plurality of battery cells 11 to hide, e.g., to cover, a rear surface of the battery cell 11 located at a rearmost side of the plurality of battery cells 11 arranged in the first direction.

The pair of side plates 33 may hide, e.g., cover, the pair of side surfaces 15 of the plurality of battery cells 11 and face to be in close contact with, e.g., direct contact, the side surfaces 15. Front end portions and rear end portions of the pair of side plates 33 may be connected to both end portions of the pair of end frames 30 in the second direction by, e.g., a method of welding or applying an adhesive.

The plurality of busbars 40 may electrically connect the plurality of battery cells 11. Each of the busbars 40 may electrically connect a positive cell terminal 25 of one battery cell 11 of the pair of adjacent battery cells 11 in the first direction and a negative cell terminal 25 of the other battery cell 11 using a method, e.g., a welding method. The plurality of busbars 40 may be arranged in two virtual lines extending in the first direction and spaced apart from each other.

The battery cell heating apparatus 100 may heat the battery cells 11 if the plurality of battery cells 11 and the battery module 10 are in a low-temperature state. The battery cell heating apparatus 100 may include a heater 130, a circuit part 140, insulators 115 and 120, and an outer cover 101. The heater 130 may emit heat to heat the battery cells 11. The circuit part 140 may be electrically connected to the heater 130 to supply power to the heater 130.

The insulators 115 and 120 may reduce or suppress heat transfer so that the circuit part 140 may not be heated or heated less by heat emitted by the heater 130. The outer cover 101 may surround and fixedly locate, e.g., hold in place, the heater 130, the circuit part 140, and the insulators 115 and 120.

The heater 130 may be a plate-shaped member having a predetermined thickness in the third direction and extending in the first direction and may include a plurality of heating parts 131 and 134 which may be spaced apart from each other and located so as not to overlap in the third direction.

The plurality of heating parts 131 and 134 may be formed by curing a paste mixed with carbon nanotubes and a metal. The metal included in the plurality of heating parts 131 and 134 may be at least one metal among for example from the group of silver (Ag), copper (Cu), nickel (Ni), gold (Au), platinum (Pt), and palladium (Pd).

In the embodiment illustrated in FIGS. 4 and 10, the heater 130 may include a pair of first heating parts 131 and one second heating part 134. The pair of first heating parts 131 may be located on both end portions of the battery cell heating apparatus 100 in the longitudinal direction, e.g., the first direction. The second heating part 134 may be located between the pair of first heating parts 131. A length HL12 of the second heating part 134 may be greater than a length HL11 of the first heating part 131 in the length direction of the battery cell heating apparatus 100, e.g., in the first direction.

A width HE12 of the second heating part 134 may be smaller than a width HE11 of the first heating part 131 in the width direction of the battery cell heating apparatus 100, e.g., in the second direction. A planar area of the second heating part 134 may be smaller than a planar area of the first heating part 131.

Each of the pair of first heating parts 131 may be located to overlap upper surfaces 17 of five battery cells 11 located in both end portions in the first direction among the plurality of battery cells 11 and may emit heat for heating the five overlapping battery cells 11. The second heating part 134 may be located to overlap upper surfaces 17 of six battery cells 11 located in an intermediate portion in the first direction among the plurality of battery cells 11, e.g., between the battery cells 11 located in end portions in the first direction among the plurality of battery cells 11, and may emit heat for heating the six overlapping battery cells 11.

An amount of heat lost from the six battery cells 11 located in the intermediate portion may be smaller than an amount of heat lost from the five battery cells 11 located in both end portions. According to one or more embodiments, power may be supplied to the heater 130, and even if an amount of heat emitted by the second heating part 134 per unit time is smaller than an amount of heat emitted by the first heating part 131 per unit time, temperatures of all the battery cells 11 included in the battery module 10 may be uniformly raised.

The circuit part 140 may be disposed around, e.g., to surround at least part of a perimeter of, the heater 130. In an implementation, the circuit part 140 and the heater 130 may be in the same horizontal plane. The circuit part 140 may include a pair of protective film layers, which overlap and may be bonded, and a plurality of electric wires formed of a conductive material and extending in the pair of protective film layers. The circuit part 140 may extend to surround the heater 130. A size of a gap CO 12 between inner circumferential corners of the circuit part 140 facing in the second direction may be slightly greater than or equal to the width HE11 of the first heating part 131.

The battery cell heating apparatus 100 may include a plurality of sensors 150, 152, 154, and 156 which may be electrically connected to the circuit part 140 and may measure a state of the plurality of battery cells 11. The plurality of sensors 150, 152, 154, and 156 may include temperature sensors 150, 152, and 154, and a voltage sensor 156.

The temperature sensors 150, 152, and 154 may measure temperatures of the battery cells 11. The temperature sensors 150, 152, and 154 may be provided as a plurality of temperature sensors 150, 152, and 154. The plurality of temperature sensors 150, 152, and 154 may correspond one-to-one to the plurality of heating parts 131 and 134. According to one or more embodiments, a first temperature sensor 150 may measure a temperature of the battery cell 11 around the first heating part 131 located at one side of the pair of first heating parts 131.

A second temperature sensor 152 may measure a temperature of the battery cell 11 around the second heating part 134. A third temperature sensor 154 may measure a temperature of the battery cell 11 around the first heating part 131 located at the other side of the pair of first heating parts 131.

Operation of one arbitrary heating part 131 or 134 of the plurality of heating parts 131 and 134 may be controlled according to a temperature measured by one temperature sensor 150, 152, or 154 of the plurality of temperature sensors 150, 152, and 154 corresponding to the one heating part 131 or 134.

If a temperature measured by the one temperature sensor 150, 152, or 154 is smaller than a preset reference temperature, one heating part 131 or 134 corresponding to the temperature sensor 150, 152, or 154 may be turned on. If a temperature measured by the one temperature sensor 150, 152, or 154 is greater than or equal to the preset reference temperature, one heating part 131 or 134 corresponding to the temperature sensor 150, 152, or 154 may be turned off.

According to one or more embodiments, when a temperature measured by the first temperature sensor 150 is smaller than the preset reference temperature, the first heating part 131 at one side corresponding to the first temperature sensor 150 may be turned on, and if a temperature measured by the first temperature sensor 150 is greater than or equal to the preset reference temperature, the first heating part 131 at one side corresponding to the first temperature sensor 150 may be turned off.

According to one or more embodiments, when a temperature measured by the second temperature sensor 152 is smaller than the preset reference temperature, the second heating part 134 corresponding to the second temperature sensor 152 may be turned on, and if a temperature measured by the second temperature sensor 152 is greater than or equal to the preset reference temperature, the second heating part 134 corresponding to the second temperature sensor 152 may be turned off.

According to one or more embodiments, when a temperature measured by the third temperature sensor 154 is smaller than the preset reference temperature, the first heating part 131 at the other side corresponding to the third temperature sensor 154 may be turned on, and if a temperature measured by the third temperature sensor 154 is greater than or equal to the preset reference temperature, the first heating part 131 at the other side corresponding to the third temperature sensor 154 may be turned off.

The voltage sensor 156 may measure a voltage of the battery cell 11. The voltage sensor 156 may be provided as a plurality of voltage sensors 156 to correspond one-to-one to the number of the busbars 40. Each of the voltage sensors 156 may be electrically connected to the corresponding busbar 40 using a method, e.g., a welding method.

The circuit part 140 electrically connects the plurality of voltage sensors 156 and the plurality of temperature sensors 150, 152, and 154 to a battery management system (BMS). The circuit part 140 may be connected to the BMS through a connector. According to one or more embodiments, detection signals generated by the plurality of temperature sensors 150, 152, and 154 may be transmitted to the BMS through the circuit part 140, and if the BMS determines that temperatures of the battery cells 11 measured by the plurality of temperature sensors 150, 152, and 154 are smaller than the preset reference temperature, the BMS may supply power for operating the heater 130 through the circuit part 140.

The insulators 115 and 120 may include a first insulator 115 and a second insulator 120. The first insulator 115 may partially cover a surface of the heater 130 facing the battery cell 11 and a surface of the circuit part 140 facing the battery cell 11. According to one or more embodiments, the first insulator 115 may partially cover a lower surface of the heater 130 and also partially cover a lower surface of the circuit part 140 at the same time.

An opening 118 to transfer radiant heat emitted by the heater 130 to the upper surface 17 of the cell case 12 of the battery cell 11 may be formed in a central portion of the first insulator 115.

In the second direction, a width SLO1 between outer circumferential corners 116 of the first insulator 115 may be greater than the size of the gap CO12 between the inner circumferential corners of the circuit part 140 and smaller than a size of a gap CO11 between outer circumferential corners of the circuit part 140. In the second direction, a width SLI1 between inner circumferential corners 117 of the first insulator 115 may be smaller than the widths HE11 and HE12 of the heater 130.

The second insulator 120 may entirely cover the surface of the heater 130 opposite to, e.g., facing away from, the battery cell 11 and partially cover the surface of the circuit part 140 facing away from the battery cell 11. For example, the second insulator 120 may entirely cover a surface of the heater 130 opposite the surface of the heater 130 covered by the first insulator 115 and partially cover the surface of the circuit part 140 opposite the surface of the circuit part 140 covered by the first insulator 115. In an implementation, the second insulator 120 may entirely cover an upper surface of the heater 130 and also partially cover an upper surface of the circuit part 140.

In the second direction, a width SU1 between outer circumferential corners 121 of the second insulator 120 may be greater than the size of the gap CO12 between the inner circumferential corners of the circuit part 140 and smaller than the gap CO11 between the outer circumferential corners of the circuit part 140. According to the above configuration, heat emitted by the heater 130 may be maximally suppressed from transferring to the circuit part 140.

The outer cover 101 may include a first film 103 and a second film 110. The first film 103 may face the plurality of battery cells 11. The second film 110 may be spaced farther apart from the plurality of battery cells 11 than the first film 103.

The first film 103 and the second film 110 may be formed of, e.g., a polyimide (PI) or polyethylene naphthalate (PEN) material. If the heater 130, the circuit part 140, and the insulators 115 and 120 are between the first film 103 and the second film 110, and the first film 103 and the second film 110 are heated and pressed in directions in which the first film 103 and the second film 110 are in close contact with each other, e.g., in the third direction, outer circumferential corners 104 of the first film 103 and outer circumferential corners 111 of the second film 110 may be bonded to form the outer cover 101.

An adhesive to be melted by heat may be applied in advance on surfaces of the first film 103 and the second film 110, e.g., an upper surface of the first film 103 and a lower surface of the second film 110.

The first film 103 may be partially open, e.g., have an opening, so that the heater 130 faces the plurality of battery cells 11. According to one or more embodiments, an opening 107 may be formed in a central portion of the first film 103. Radiant heat emitted by the heater 130 may be transferred to the upper surface 17 of the cell case 12 of the battery cell 11 through the opening 118 of the first insulator 115 and the opening 107 of the first film 103.

In the second direction, a width FLO1 between the outer circumferential corners 104 of the first film 103 may be greater than the size of the gap CO11 between the outer circumferential corners of the circuit part 140. In the second direction, a width FLI1 between inner circumferential corners 105 of the first film 103 may be greater than the width SLI1 between the inner circumferential corners 117 of the first insulator 115 and smaller than the width SLO1 between the outer circumferential corners 116 of the first insulator 115.

The battery cell heating apparatus 100 may be installed in the battery module 10 so that the first film 103 is in contact with the upper surface 17 of the cell case 12. According to one or more embodiments, the battery cell heating apparatus 100 may be in contact with the plurality of battery cells 11. The plurality of temperature sensors 150, 152, and 154 and the plurality of voltage sensors 156 may be located at the outside of the outer cover 101 instead of the inside of the outer cover 101 in which the heater 130, the circuit part 140, and the insulators 115 and 120 may be located.

The heater 130 may include a heater terminal 135. According to one or more embodiments, a pair of heater terminals 135 may be provided for each of the heating parts 131 and 134 to independently supply power to each of the pair of first heating parts 131 and one second heating part 134 which may be included in the heater 130. The heater terminal 135 may be formed on upper surfaces of the heating parts 131 and 134.

The circuit part 140 may include circuit part terminals 145 overlapping the heater terminals 135. The circuit part 140 may include a terminal support piece 143 with a pair of circuit part terminals 145 formed on the lower surface thereof. The terminal support piece 143 may protrude in a direction to overlap the heater 130.

The circuit part terminals 145 may correspond one-to-one to the heater terminals 135. According to one or more embodiments, three pairs of circuit part terminals 145 may be provided to correspond to three pairs of heater terminals 135, and three terminal support pieces 143 may be provided. The heater terminals 135 and the circuit part terminals 145 may overlap and be electrically connected to each other.

As illustrated in FIG. 7, a heater terminal 135 and a circuit part terminal 145 may be in close contact, e.g., direct contact, with each other while being heated to be electrically connected to each other. According to one or more embodiments, the heater terminal 135 may include a terminal body 1351 formed of a metal material and a solder layer 1352 stacked and cured on a surface of the terminal body 1351. Like the heater terminal 135, the circuit part terminal 145 may include a terminal body 1451 formed of a metal material and a solder layer 1452 stacked and cured on a surface of the terminal body 1451.

If the heater terminal 135 and the circuit part terminal 145 are aligned in the third direction and pressed to be in close contact with each other at the same time, the solder layer 1352 of the heater terminal 135 and the solder layer 1452 of the circuit part terminal 145 may be bonded by being melted so that the heater terminal 135 and the circuit part terminal 145 may be electrically connected.

According to one or more embodiments, referring to FIG. 8, a heater terminal 135 and a circuit part terminal 145 may overlap to be electrically connected to each other with a solder 147 interposed therebetween. According to one or more embodiments, when the heater terminal 135 is coated with the solder 147, and the circuit part terminal 145 is aligned with the heater terminal 135 and then moved toward the heater terminal 135, the circuit part terminal 145 may be surface mounted on the heater terminal 135. According to one or more embodiments, the heater terminal 135 and the circuit part terminal 145 may be electrically connected.

Referring to FIG. 9, a heater terminal 135 and a circuit part terminal 145 may be electrically connected by a rivet 148 which passes through and couples the heater terminal 135 and the circuit part terminal 145 aligned with each other in a third direction. According to one or more embodiments, the rivet 148 may pass through a terminal support piece 143, the circuit part terminal 145, the heater terminal 135, and a heater 130 to couple the heater terminal 135 and the circuit part terminal 145 so that the heater terminal 135 and the circuit part terminal 145 may not be separated. According to one or more embodiments, the heater terminal 135 and the circuit part terminal 145 may be electrically connected.

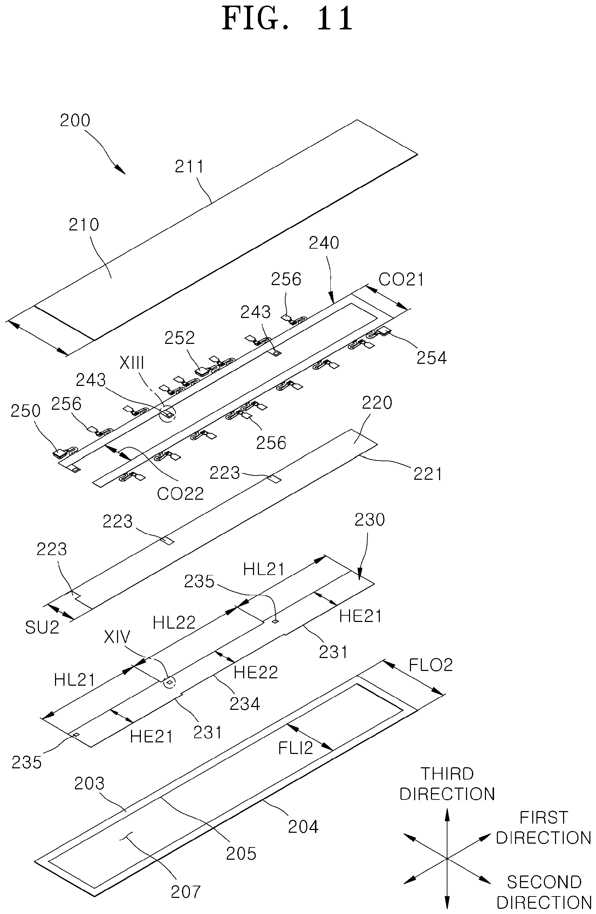

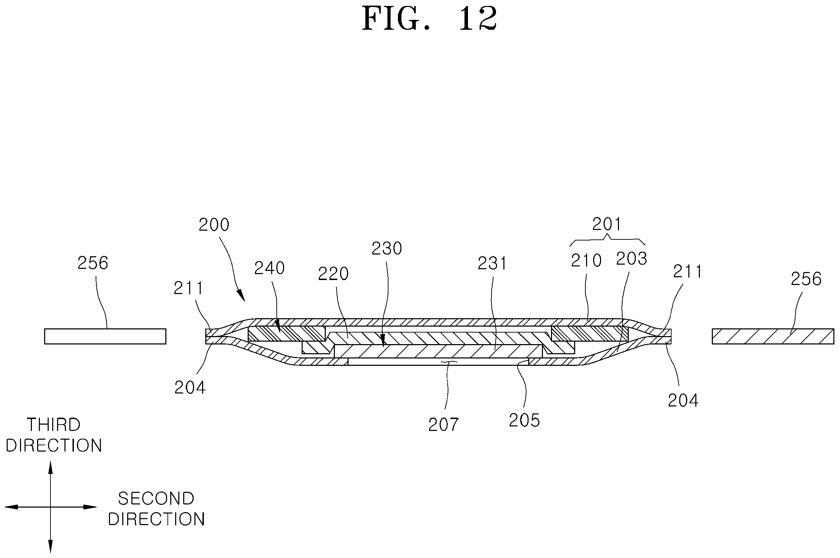

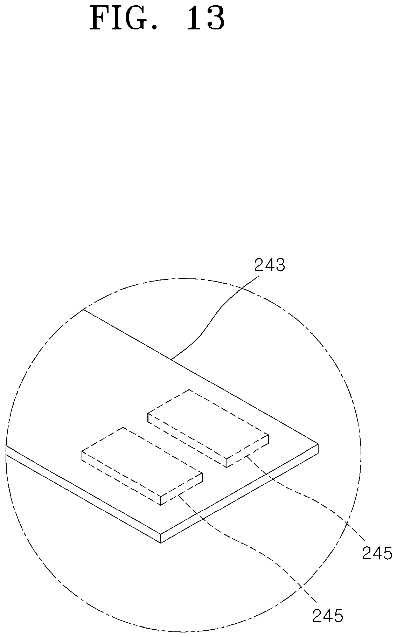

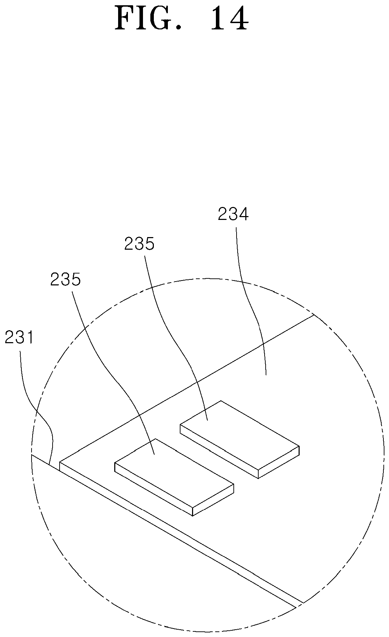

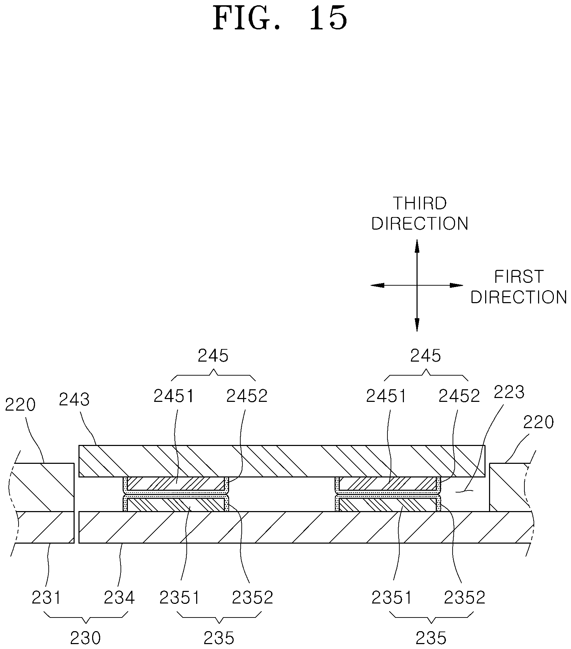

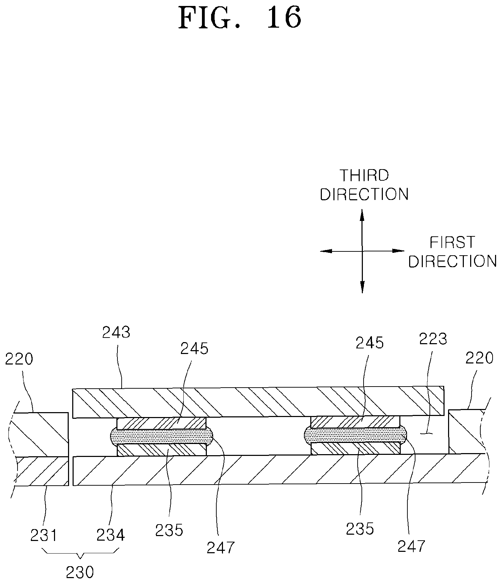

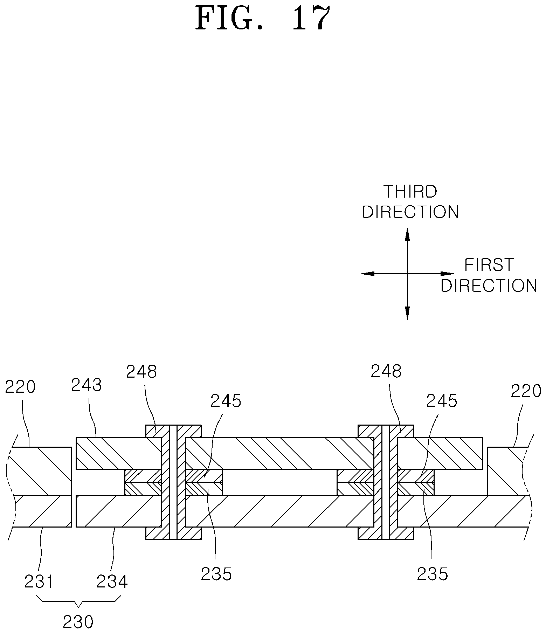

FIG. 11 is an exploded perspective view illustrating a battery cell heating apparatus according to second embodiments of the present disclosure, and FIG. 12 is a longitudinal sectional view illustrating the battery cell heating apparatus according to the second embodiments of the present disclosure. FIG. 13 is an enlarged view illustrating portion XIII of FIG. 11, and FIG. 14 is an enlarged view illustrating portion XIV of FIG. 11. FIG. 15 is a cross-sectional view illustrating a first example in a state in which a circuit part terminal of FIG. 13 is electrically connected to a heating element terminal of FIG. 14. FIG. 16 is a cross-sectional view illustrating a second example in a state in which the circuit part terminal of FIG. 13 is electrically connected to the heating element terminal of FIG. 14, and FIG. 17 is a cross-sectional view illustrating a third example in a state in which the circuit part terminal of FIG. 13 is electrically connected to the heating element terminal of FIG. 14.

Referring to FIGS. 1, 2, and 11 to 14, a battery cell heating apparatus 200 according to the second embodiments of the present disclosure may be installed in the battery module 10 illustrated in FIG. 1 instead of the battery cell heating apparatus 100 according to the first embodiments of the present disclosure. The battery cell heating apparatus 200 may include a heater 230, a circuit part 240, an insulator 220, and an outer cover 201. The heater 230 may emit heat to heat battery cells 11. The circuit part 240 may be electrically connected to a heater 230 to supply power to the heater 230.

The insulator 220 may reduce or suppress heat transfer so that the circuit part 240 may not be heated or may be heated less by heat emitted by the heater 230. The outer cover 201 may surround and fixedly locate the heater 230, the circuit part 240, and the insulator 220.

The heater 230 may be a plate-shaped member having a predetermined thickness in a third direction and extending in a first direction and may include a plurality of heating parts 231 and 234 which may be spaced apart from each other and located so as not to overlap in the third direction.

The plurality of heating parts 231 and 234 may be formed by curing a paste mixed with carbon nanotubes and a metal. The metal included in the plurality of heating parts 231 and 234 may be at least one metal for example among the group of silver (Ag), copper (Cu), nickel (Ni), gold (Au), platinum (Pt), and palladium (Pd).

The heater 230 may include a pair of first heating parts 231 and one second heating part 234. The pair of first heating parts 231 may be located on both end portions of the battery cell heating apparatus 200 in a longitudinal direction, e.g., in the first direction. The second heating part 234 may be located between the pair of first heating parts 231. A length HL22 of the second heating part 234 may be greater than a length HL21 of the first heating part 231.

A width HE22 of the second heating part 234 may be smaller than a width HE21 of the first heating part 231 in a width direction of the battery cell heating apparatus 200, that is, in a second direction. A planar area of the second heating part 234 may be smaller than a planar area of the first heating part 231.

Each of the pair of first heating parts 231 may be located to overlap upper surfaces 17 of five battery cells 11 located in both end portions in the first direction among a plurality of battery cells 11 and may emit heat for heating the five overlapping battery cells 11. The second heating part 234 may overlap upper surfaces 17 of six battery cells 11 located in an intermediate portion in the first direction among the plurality of battery cells 11 and may emit heat for heating the six overlapping battery cells 11.

An amount of heat lost from the six battery cells 11 located in the intermediate portion may be smaller than an amount of heat lost from the five battery cells 11 located in both end portions. According to one or more embodiments, power may be supplied to the heater 230, and even if an amount of heat emitted by the second heating part 234 per unit time is smaller than an amount of heat emitted by the first heating part 231 per unit time, temperatures of all the battery cells 11 included in the battery module 10 may be uniformly raised.

The circuit part 240 may be disposed around, e.g., border, the heater 230. According to one or more embodiments, the circuit part 240 may not overlap the heater 230 in the third direction. However, the circuit part 240 may be spaced farther apart from the battery cell 11 than the heater 230 is from the battery cell 11. In other words, the circuit part 240 and the heater 230 may be spaced apart from one another in the third direction. According to one or more embodiments, a distance between the heater 230 and the battery cell 11 may be smaller than a distance between the circuit part 240 and the battery cell 11.

The circuit part 240 may include a pair of protective film layers, which overlap and may be bonded, and a plurality of electric wires formed of a conductive material and extending in the pair of protective film layers. A size of a gap CO22 between inner circumferential corners of the circuit part 240 facing in the second direction may be slightly greater than or equal to the width HE21 of the first heating part 231.

The battery cell heating apparatus 200 may include a plurality of sensors 250, 252, 254, and 256 which may be electrically connected to the circuit part 240 and measure a state of the plurality of battery cells 11. The plurality of sensors 250, 252, 254, and 256 may include temperature sensors 250, 252, and 254 and a voltage sensor 256.

The temperature sensors 250, 252, and 254 may measure temperatures of the battery cells 11. The temperature sensors 250, 252, and 254 may be provided as a plurality of temperature sensors 250, 252, and 254. The plurality of temperature sensors 250, 252, and 254 may correspond one-to-one to the plurality of heating parts 231 and 234. According to one or more embodiments, a first temperature sensor 250 may measure a temperature of the battery cell 11 around the first heating part 231 located at one side of the pair of first heating parts 231.

A second temperature sensor 252 may measure a temperature of the battery cell 11 around the second heating part 234. A third temperature sensor 254 may measure a temperature of the battery cell 11 around the first heating part 231 located at the other side of the pair of first heating parts 231.

Operation of one arbitrary heating part 231 or 234 of the plurality of heating parts 231 and 234 may be controlled according to a temperature measured by one temperature sensor 250, 252, or 254 of the plurality of temperature sensors 250, 252, and 254 corresponding to the one heating part 231 or 234.

If a temperature measured by the one temperature sensor 250, 252, or 254 is smaller than a preset reference temperature, one heating part 231 or 234 corresponding to the temperature sensor 250, 252, or 254 may be turned on, and if a temperature measured by the one temperature sensor 250, 252, or 254 is greater than or equal to the preset reference temperature, one heating part 231 or 234 corresponding to the temperature sensor 250, 252, or 254 may be turned off.

According to one or more embodiments, when a temperature measured by the first temperature sensor 250 is smaller than the preset reference temperature, the first heating part 231 at one side corresponding to the first temperature sensor 250 may be turned on, and if a temperature measured by the first temperature sensor 250 is greater than or equal to the preset reference temperature, the first heating part 231 at one side corresponding to the first temperature sensor 250 may be turned off.

According to one or more embodiments, when a temperature measured by the second temperature sensor 252 is smaller than the preset reference temperature, the second heating part 234 corresponding to the second temperature sensor 252 may be turned on, and if a temperature measured by the second temperature sensor 252 is greater than or equal to the preset reference temperature, the second heating part 234 corresponding to the second temperature sensor 252 may be turned off.

According to one or more embodiments, when a temperature measured by the third temperature sensor 254 is smaller than the preset reference temperature, the first heating part 231 at the other side corresponding to the third temperature sensor 254 may be turned on, and if a temperature measured by the third temperature sensor 254 is greater than or equal to the preset reference temperature, the first heating part 231 at the other side corresponding to the third temperature sensor 254 may be turned off.

The voltage sensor 256 may measure a voltage of the battery cell 11. The voltage sensor 256 may be provided as a plurality of voltage sensors 256 to correspond one-to-one to the number of the busbars 40. Each of the voltage sensors 256 may be electrically connected to the corresponding busbar 40 using a method, e.g., a welding method.

The circuit part 240 may electrically connect the plurality of voltage sensors 256 and the plurality of temperature sensors 250, 252, and 254 to a BMS. The circuit part 240 may be connected to the BMS through a connector. According to one or more embodiments, detection signals generated by the plurality of temperature sensors 250, 252, and 254 may be transmitted to the BMS through the circuit part 240, and if the BMS determines that temperatures of the battery cells 11 measured by the plurality of temperature sensors 250, 252, and 254 are smaller than the preset reference temperature, the BMS may supply power for operating the heater 230 through the circuit part 240.

The insulator 220 may be located between the heater 230 and the circuit part 240. A width SU2 between outer circumferential corners 221 of the insulator 220 in the second direction may be greater than the widths HE21 and HE22 of the heater 230, specifically, the width HE21 of the first heating part 231, and smaller than a size of a gap CO21 between outer circumferential corners of the circuit part 240.

The insulator 220 may entirely cover a surface of the heater 230 facing away from battery cell 11 and partially cover a surface of the circuit part 240 facing the battery cell 11. According to one or more embodiments, the insulator 220 may entirely cover an upper surface of the heater 230 and also partially cover a lower surface of the circuit part 240.

In an inside space of the outer cover 201, if the heater 230, the insulator 220, and the circuit part 240 are pressed to be in close contact with each other, the insulator 220 may be bent and then the heater 230 may move to a space between the inner circumferential corners of the circuit part 240. According to one or more embodiments, the upper surface of the heater 230 may be surrounded by the insulator 220 to maximally suppress heat emitted by the heater 230 from transferring to the circuit part 240.

The outer cover 201 may include a first film 203 and a second film 210. The first film 203 may be located to face the plurality of battery cells 11. The second film 210 may be spaced farther apart from the plurality of battery cells 11 than the first film 203 is from the plurality of battery cells 11.

The first film 203 and the second film 210 may be formed of, e.g., a PI or PEN material. If the heater 230, the circuit part 240, and the insulator 220 are interposed between the first film 203 and the second film 210, and the first film 203 and the second film 210 are heated and pressed in directions in which the first film 203 and the second film 210 are in close contact with each other outer circumferential corners 204 of the first film 103 and outer circumferential corners 211 of the second film 210 may be bonded to form the outer cover 201.

An adhesive which may be melted by heat may be applied in advance on surfaces of the first film 203 and the second film 210, e.g., an upper surface of the first film 203 and a lower surface of the second film 210.

The first film 203 may be partially open, e.g., have an opening, so that the heater 230 faces the plurality of battery cells 11. According to one or more embodiments, an opening 207 may be formed in a central portion of the first film 203. Radiant heat emitted by the heater 230 may be transferred to an upper surface 17 of the cell case 12 of the battery cell 11 through the opening 207 of the first film 203.

In the second direction, a width FLO2 between the outer circumferential corners 204 of the first film 203 may be greater than the size of the gap CO21 between the outer circumferential corners of the circuit part 240. In the second direction, a width FLI2 between inner circumferential corners 205 of the first film 203 may be smaller than the widths HE21 and HE22 of the heater 230, specifically, the width HE22 of the second heating part 234.

The battery cell heating apparatus 200 may be installed in the battery module 10 so that the first film 203 may be in contact with the upper surface 17 of the cell case 12. According to one or more embodiments, the battery cell heating apparatus 200 may be in contact with the plurality of battery cells 11. The plurality of temperature sensors 250, 252, and 254 and the plurality of voltage sensors 256 may be located at the outside of the outer cover 201 instead of the inside of the outer cover 201 in which the heater 230, the circuit part 240, and the insulator 220 may be located.

The heater 230 may include a heater terminal 235. According to one or more embodiments, a pair of heater terminals 235 may be provided for each of the heating parts 231 and 234 to independently supply power to each of the pair of first heating parts 231 and one second heating part 234 which may be included in the heater 230. The heater terminals 235 may be formed on upper surfaces of the heating parts 231 and 234.

The circuit part 240 may include circuit part terminals 245 overlapping the heater terminals 235. The circuit part 240 may include a terminal support piece 243 with a pair of circuit part terminals 245 formed on the lower surface thereof. The terminal support piece 243 may protrude in a direction to overlap the heater 230.

The circuit part terminals 245 may correspond one-to-one to the heater terminals 235. According to one or more embodiments, three pairs of circuit part terminals 245 may be provided to correspond to three pairs of heater terminals 235, and three terminal support pieces 243 may be provided.

The insulator 220 may be between the heater terminal 235 and the circuit part terminal 245. The insulator 220 may include a terminal connecting part 223 electrically connecting the heater terminal 235 and the circuit part terminal 245.

The terminal connecting part 223 may be an insulator through hole which passes through the insulator 220 in a thickness direction. The heater terminal 235 and the circuit part terminal 245 may be in direct contact and be electrically connected to each other through the insulator through hole of the terminal connecting part 223.

As illustrated in FIG. 15, a heater terminal 235 and a circuit part terminal 245 may be in close contact with each other while being heated to be electrically connected to each other. According to one or more embodiments, the heater terminal 235 may include a terminal body 2351 formed of a metal material and a solder layer 2352 stacked and cured on a surface of the terminal body 2351. Like the heater terminal 235, the circuit part terminal 245 may include a terminal body 2451 formed of a metal material and a solder layer 2452 stacked and cured on a surface of the terminal body 2451.

If the heater terminal 235, an insulator through hole of the terminal connecting part 223, and the circuit part terminal 245 are aligned in a third direction and pressed to be in close contact with each other at the same time, at least one of an insulator 220, a heater 230, and a circuit part 240 may be elastically compressed, and then the heater terminal 235 may be in contact with the circuit part terminal 245. According to one or more embodiments, the solder layer 2352 of the heater terminal 235 and the solder layer 2452 of the circuit part terminal 245 may be melted and coupled to electrically connect the heater terminal 235 and the circuit part terminal 245.

According to one or more embodiments, referring to FIG. 16, a heater terminal 235 and a circuit part terminal 245 may overlap to be electrically connected to each other with a solder 247 therebetween. According to one or more embodiments, when the heater terminal 235 is coated with the solder 247, and the circuit part terminal 245 is aligned with the heater terminal 235, passes through an insulator through hole of the terminal connecting part 223, and then is moved toward the heater terminal 235, at least one of an insulator 220, a heater 230, and a circuit part 240 may be elastically compressed, and then the circuit part terminal 245 may be surface mounted on the heater terminal 235. According to one or more embodiments, the heater terminal 235 and the circuit part terminal 245 may be electrically connected.

Referring to FIG. 17, a heater terminal 235 and a circuit part terminal 245 may be electrically connected by a rivet 148 which may pass through and couple the heater terminal 235 and the circuit part terminal 245 aligned with each other in a third direction. According to one or more embodiments, in a state in which the heater terminal 235 and the circuit part terminal 245 may be in contact with each other through an insulator through hole of the terminal connecting part 223, the rivet 148 may pass through a terminal support piece 243, the circuit part terminal 245, the heater terminal 235, and a heater 230 to couple the heater terminal 235 and the circuit part terminal 245 so that the heater terminal 235 and the circuit part terminal 245 may not be separated. According to one or more embodiments, the heater terminal 235 and the circuit part terminal 245 may be electrically connected.

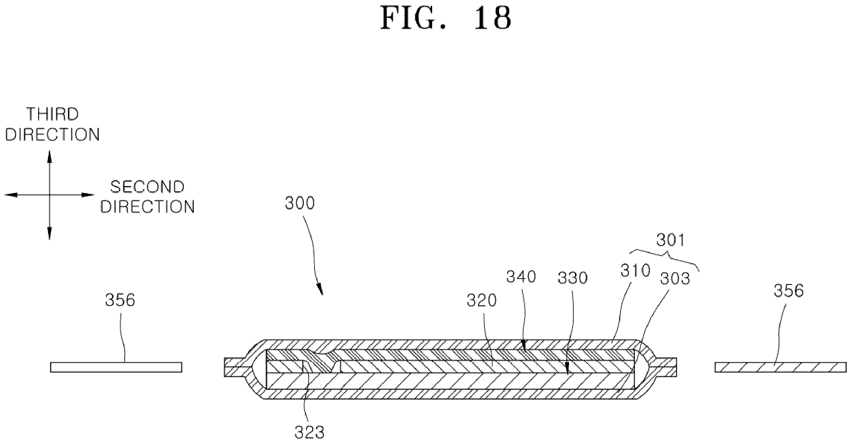

FIG. 18 is a cross-sectional view illustrating a battery cell heating apparatus according to third embodiments of the present disclosure. Referring to FIGS. 1, 2, and 18, a battery cell heating apparatus 300 according to the third embodiments of the present disclosure may be installed in the battery module 10 illustrated in FIG. 1 instead of the battery cell heating apparatus 100 according to the first embodiment of the present disclosure. The battery cell heating apparatus 300 may include a heater 330, a circuit part 340, an insulator 320, and an outer cover 301. The heater 330 may emit heat to heat battery cells 11. The circuit part 340 may be electrically connected to the heater 330 to supply power to the heater 330.

The insulator 320 may suppress heat transfer so that the circuit part 340 may not be heated by heat emitted by the heater 330. The outer cover 301 may surround and fixedly locate the heater 330, the circuit part 340, and the insulator 320.

The heater 330 may be a plate shaped member having a predetermined thickness in a third direction and extending in a first direction. The heater 330 may be formed by curing a paste mixed with carbon nanotubes and a metal. The metal included in the heater 330 may be at least one metal for example among the group of silver (Ag), copper (Cu), nickel (Ni), gold (Au), platinum (Pt), and palladium (Pd).

The circuit part 340 may be spaced farther apart from the battery cell 11 than the heater 330 may be from the battery cell 11. According to one or more embodiments, the circuit part 340 and the heater 330 may be spaced apart from one another in the third direction. In other words, a distance between the heater 330 and the battery cell 11 may be smaller than a distance between the circuit part 340 and the battery cell 11.

The circuit part 340 may include a pair of protective film layers, which may overlap and may be bonded, and a plurality of electric wires formed of a conductive material and extending in the pair of protective film layers.

The battery cell heating apparatus 300 may include a plurality of sensors which may be electrically connected to the circuit part 340 and may measure a state of the plurality of battery cells 11. The plurality of sensors may include a temperature sensor and a voltage sensor 356. The temperature sensor may measure a temperature of the battery cell 11, and the voltage sensor 356 may measure a voltage of the battery cell 11. The voltage sensor 356 may be provided as a plurality of voltage sensors 356 to correspond one-to-one to the number of busbars 40.

The insulator 320 may be located between the heater 330 and the circuit part 340. According to one or more embodiments, an upper surface of the heater 330 may be surrounded by the insulator 320 to maximally suppress heat emitted by the heater 330 from transferring to the circuit part 340.

The outer cover 301 may include a first film 303 and a second film 310. The first film 303 may face a plurality of battery cells 11. The second film 310 may be spaced farther apart from the plurality of battery cells 11 than the first film 303 may be from the plurality of battery cells 11.

The first film 303 and the second film 310 may be formed of, e.g., a PI or PEN material. If the heater 330, the circuit part 340, and the insulator 320 are between the first film 303 and the second film 310, and the first film 303 and the second film 310 are heated and pressed in directions in which they are in close contact with each other, outer circumferential corners of the first film 303 and outer circumferential corners of the second film 310 may be bonded to form the outer cover 301.

The battery cell heating apparatus 300 may be installed in the battery module 10 so that the first film 303 may be in contact with an upper surface 17 of the cell case 12. According to one or more embodiments, the battery cell heating apparatus 300 may be in contact with the plurality of battery cells 11. The plurality of temperature sensors and the plurality of voltage sensors 356 may be located at the outside of the outer cover 301 instead of the inside of the outer cover 301 in which the heater 330, the circuit part 340, and the insulator 320 may be located.

The heater 330 may include a heater terminal. The heater terminal may be on the upper surface of the heater 330. The circuit part 340 may include a circuit part terminal overlapping the heater terminal. The circuit part terminal may correspond to the heater terminal one to one.

The insulator 320 may be between the heater terminal and the circuit part terminal. The insulator 320 may include a terminal connecting part 323 which may electrically connect the heater terminal and the circuit part terminal.

The terminal connecting part 323 may be an insulator through hole which passes through the insulator 320 in a thickness direction. The heater terminal and the circuit part terminal may be in direct contact to be electrically connected to each other by the insulator through hole of the terminal connecting part 323.

By way of summation and review, secondary batteries for driving devices or energy storage may be used in not only small devices such as portable electronic devices, but also in medium-to-large devices such as electric vehicles and energy storage systems (ESSs). Particularly, in the case of the medium-to-large devices, one battery module may be formed in a form in which a plurality of battery cells may be electrically connected to each other to increase the output power and/or capacity of the battery.

The charge and discharge performance of the battery module at temperatures below zero, that is, at low temperatures, may be lower than the charge and discharge performance at ambient temperature and the decrease of the charge and discharge performance may be proportional to the decrease of the temperature.

According to embodiments of the present disclosure, battery cells may be heated in a low-temperature environment, and thus temperatures of the battery cells and a battery module may be rapidly increased. Accordingly, the charging and discharging performance degradation of the battery cells and the battery module including the plurality of battery cells may be suppressed or at least reduced. In particular, an aspect of embodiments of the present disclosure may be directed to providing a battery cell heating apparatus, which heats a battery cell to suppress the degradation of a battery module in a low-temperature environment, and a battery module.

## Claims

1. A battery cell heating apparatus (100, 200, 300) comprising:
a heater (130, 230, 330) configured to emit heat to heat a battery cell (11);
a circuit part (140, 240, 340) electrically connected to the heater (130, 230, 330) and configured to supply power to the heater (130, 230, 330);
an insulator (115, 120, 220, 320) configured to reduce heat transfer such that the circuit part (140, 240, 340) is heated less by the heat emitted by the heater (130, 230, 330); and
an outer cover (101, 201, 301) which surrounds and fixedly holds the heater (130, 230, 330), the circuit part (140, 240, 340), and the insulator (115, 120, 220, 320).

2. The battery cell heating apparatus (100, 200, 300) as claimed in claim 1, wherein:
the heater (130, 230, 330) includes a heater terminal (135, 235),
the circuit part (140, 240, 340) includes a circuit part terminal (145, 245), wherein
the heater terminal (135, 235) and the circuit part terminal (145, 245) overlap and are electrically connected to each other, and wherein
the circuit part (140, 240, 340) is disposed around the heater (130, 230, 330), and/or wherein
the insulator (115, 120, 220, 320) is disposed between the heater terminal (135, 235) and the circuit part terminal (145, 245), wherein the insulator (115, 120, 220, 320) includes a terminal connecting part (223, 323) electrically connecting the heater terminal (135, 235) and the circuit part terminal (145, 245).

3. The battery cell heating apparatus (100, 200, 300) as claimed in claim 2, wherein each of the heater terminal (135, 235) and the circuit part terminal (145, 245) includes:
a terminal body (1351, 1451, 2351, 2451) including a metal material, and at least one of
a solder layer (1352, 1452, 2352, 2452) stacked on the terminal body (1351, 1451, 2351, 2451) such that the heater terminal (135, 235) and the circuit part terminal (145, 245) are bonded if the heater terminal (135, 235) and the circuit part terminal (145, 245) are in close contact and melted while being heated,
a solder (147, 247) disposed between the overlapping heater terminal (135, 235) and the circuit part terminal (145, 245) such that the heater terminal (135, 235) and the circuit part terminal (145, 245) are electrically connected, and
a rivet (148) passing through and coupling the heater terminal (135, 235) and the circuit part terminal (145, 245) such that the heater terminal (135, 235) and the circuit part terminal (145, 245) are electrically connected.

4. The battery cell heating apparatus (100, 200, 300) as claimed in any one of the preceding claims, wherein the insulator (115, 120, 220, 320) includes:
a first insulator (115) which partially covers a surface of the heater (130, 230, 330) facing the battery cell (11) and a surface of the circuit part (140, 240, 340) facing the battery cell (11), and
a second insulator (120) which entirely covers a surface of the heater (130, 230, 330) facing away from the battery cell (11) and partially covers a surface of the circuit part (140, 240, 340) facing away from the battery cell (11).

5. The battery cell heating apparatus (100, 200, 300) as claimed in any one of the preceding claims, wherein the circuit part (140, 240, 340) is spaced further apart from the battery cell (11) than the heater (130, 230, 330).

6. The battery cell heating apparatus (100, 200, 300) as claimed in any one of the preceding claims, wherein the outer cover (101, 201, 301) includes:
a first film (103, 203, 303) facing the battery cell (11), and
a second film (110, 210, 310) spaced further apart from the battery cell (11) than the first film (103, 203, 303).

7. The battery cell heating apparatus (100, 200, 300) as claimed in claim 6, wherein the first film (103, 203, 303) includes an opening such that the heater (130, 230, 330) faces the battery cell (11).

8. The battery cell heating apparatus (100, 200, 300) as claimed in any one of the preceding claims, wherein the heater (130, 230, 330) includes carbon nanotubes.

9. The battery cell heating apparatus (100, 200, 300) as claimed in any one of the preceding claims, further comprising a sensor (150, 152, 154, 156, 250, 252, 254, 256, 356) which is electrically connected to the circuit part (140, 240, 340), configured to measure a state of the battery cell (11), and located outside the outer cover (101, 201, 301).

10. The battery cell heating apparatus (100, 200, 300) as claimed in claim 9, wherein the sensor (150, 152, 154, 156, 250, 252, 254, 256, 356) includes a voltage sensor (156, 256, 356) configured to measure a voltage of the battery cell (11) and/or a temperature sensor (150, 152, 154, 250, 252, 254) configured to measure a temperature of the battery cell (11).

11. The battery cell heating apparatus (100, 200, 300) as claimed in claim 9 or 10, wherein:
the heater (130, 230, 330) includes a plurality of heating parts (131, 134, 231, 234) located such that they do not overlap each other,
the sensor (150, 152, 154, 156, 250, 252, 254, 256, 356) includes a plurality of temperature sensors (150, 152, 154, 250, 252, 254), the number of which correspond at least one-to-one with the plurality of heating parts (131, 134, 231, 234) and which are configured to measure temperatures around the plurality of heating parts (131, 134, 231, 234), and wherein
each heating part (131, 134, 231, 234) of the plurality of heating parts (131, 134, 231, 234) is configured such that its operation is controlled according to a temperature measured by a corresponding temperature sensor (150, 152, 154, 250, 252, 254) of the plurality of temperature sensors (150, 152, 154, 250, 252, 254).

12. A battery module (10) comprising:
a plurality of battery cells (11); and
a battery cell heating apparatus (100, 200, 300) according to any one of the preceding claims at least including:
the heater (130, 230, 330) configured to emit heat to heat at least one battery cell (11) of the plurality of battery cells (11),
the circuit part (140, 240, 340) electrically connected to the heater (130, 230, 330) and configured to supply power to the heater (130, 230, 330),
the insulator (115, 120, 220, 320) configured to reduce heat transfer such that the circuit part (140, 240, 340) is heated less by the heat emitted by the heater (130, 230, 330), and
the outer cover (101, 201, 301) which surrounds and fixedly holds the heater (130, 230, 330), the circuit part (140, 240, 340), and the insulator (115, 120, 220, 320).

13. The battery module (10) as claimed in claim 12, wherein:
the plurality of battery cells (11) are disposed in a line in one direction; and
the battery cell heating apparatus (100, 200, 300) is in contact with the plurality of battery cells (11) and extends in the one direction.

14. The battery module (10) as claimed in claim 12 or 13, wherein:
each heating part (131, 134, 231, 234) of the plurality of heating parts (131, 134, 231, 234) is configured to turn on if the temperature measured by its corresponding temperature sensor (150, 152, 154, 250, 252, 254) of the plurality of temperature sensors (150, 152, 154, 250, 252, 254) is smaller than a preset reference temperature, and
each heating part (131, 134, 231, 234) of the plurality of heating parts (131, 134, 231, 234) is configured to turn off if the temperature measured by its corresponding temperature sensor (150, 152, 154, 250, 252, 254) of the plurality of temperature sensors (150, 152, 154, 250, 252, 254) is greater than a reference temperature or equal to a reference temperature.

15. The battery module (10) as claimed in any one of claims 12 to 14, wherein:
the plurality of heating parts (131, 134, 231, 234) include a pair of first heating parts (131, 231) located in both end portions of the battery cell heating apparatus (100, 200, 300) in a longitudinal direction and a second heating part (134, 234) located between the pair of first heating parts (131, 231);
a length of the second heating part (134, 234) is greater than a length of the first heating part (131, 231); and
a planar area of the second heating part (134, 234) is smaller than a planar area of the first heating part (131, 231).
